# EUROPEAN PATENT SPECIFICATION

(11) **EP 2 655 952 B1**
(45) Date of publication and mention of the grant of the patent: **08.10.2014**
(21) Application number: 11791288.1
(22) Date of filing: 06.12.2011
(51) Int. Cl.: F16M 13/02

(54) **AN ELECTRONIC DEVICE THAT CAN BE HUNG ON THE WALL**
ELEKTRONISCHE VORRICHTUNG ZUM AUFHÄNGEN AN DER WAND
DISPOSITIF ÉLECTRONIQUE QUI PEUT ÊTRE SUSPENDU AU MUR

(30) Priority: 24.12.2010 TR 201010884
(43) Date of publication of application: 30.10.2013
(73) Proprietor: Arçelik Anonim Sirketi, 34950 Istanbul (TR)
(72) Inventor: AYTEN, Serdar, 34950 Istanbul (TR)
(86) International application number: PCT/EP2011/071843
(87) International publication number: WO 2012/084478

(56) References cited:
- EP-A1- 2 169 115
- CN-Y- 201 084 447
- KR-A- 20020 026 107

## Description

The present invention relates to electronic devices such as television, display etc. that can be hung on the wall.

Electronic devices, especially the display devices such as television, display etc., are hung on the walls for not creating cable pollution in the places where they are used and for providing them to occupy less space. Electronic devices are hung on the wall by using hanger members. In case of any malfunction of the electronic devices hung by means of the state of the art hanger members, the electronic device is not easily detached from the hanger member due to the characteristic of the connection therebetween.

In the state of the art Korean Patent Application No. KR20020026107, a television, which is hung on the wall by means of a hanger member, is explained.

In the state of the art Chinese Patent Application No. CN201084447, a television, which comprises a connection member that is snap-fittingly mounted onto the hanger member for fixing the hanger member, is explained.

The aim of the present invention is the realization of an electronic device comprising an easily detachable hanger member which provides the electronic device to be hung on the wall.

The electronic device realized in order to attain the aim of the present invention, explicated in the first claim and the respective claims thereof, is hung on the wall by using a hanger member mounted to a connection member fixed onto the panel. In order that the hanger member can be mounted to the connection member, an opening on the cover, at the level of each connection member, and a recess on the connection member, opposite the opening, are provided. The hanger member is mounted to the connection member by inserting the protrusion, which is disposed at the end of the hanger member, into the recess.

In the electronic device of the present invention, in order that when the hanger member is desired to be dismounted, the connection member is prevented from being dismounted together with it, a lock is placed between these two members. The lock prevents the transmission of the force, which is exerted on the hanger member for dismounting it, to the connection member.

Preferably the connection member is mounted to the housing, and the hanger member to the connection member by using screws and by being rotated. In this embodiment, the lock is shaped so as not to rotate when the hanger member is rotated and thus to prevent also the rotation of the connection member.

In an embodiment of the present invention, an extension is disposed on one surface of the connection member body and a flange on the other surface thereof. The inner surface of the flange is shaped such that the retainer, which is disposed on the lock, is placed therein and shape locking is provided. Similarly, the outer surface of the retainer has a configuration matching with the inner surface of the flange. Thus, locking is provided to be realized easily and in a safe manner.

In an embodiment of the present invention, the lock furthermore comprises more than one detent means disposed around the retainer, bearing against the flange from the outside when the retainer is seated into the flange and which provides the lock to hold the connection member more effectively.

In an embodiment of the present invention, first the connection member is mounted onto the panel and then the cover is fixed to the rear surface of panel and the lock is mounted to the connection member from the outside of the cover afterwards. In this embodiment, holes are disposed around the opening for the detent means to pass through. Thus, the rotating force exerted on the hanger member is supported also by the panel as a result of the detent means bearing against the panel from the edges of the holes.

By means of the present invention, an electronic device the hanger member of which is easily mounted/dismounted is realized.

The electronic device realized in order to attain the aim of the present invention is illustrated in the attached figures, where:

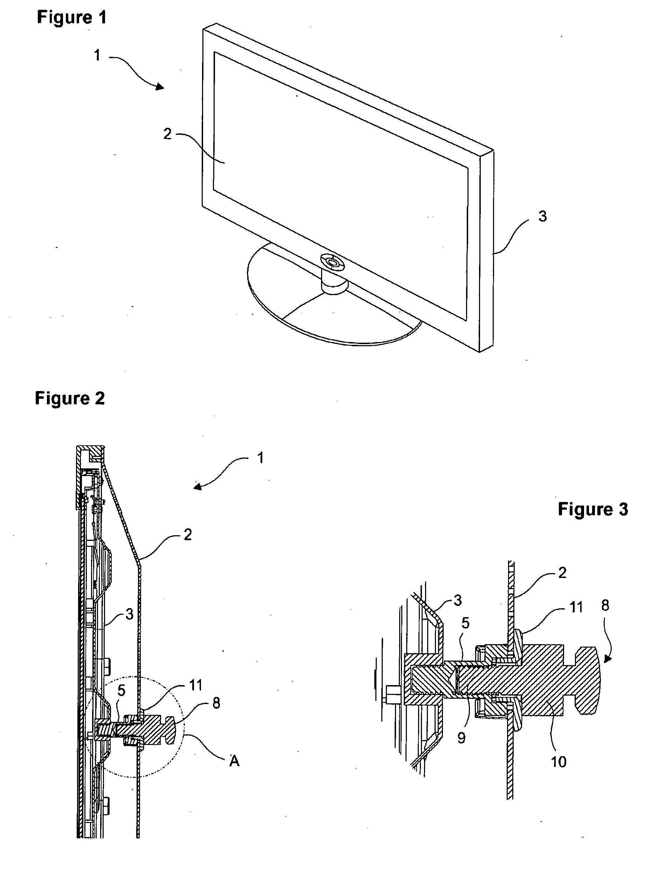

Figure 1 - is the schematic view of an electronic device.
Figure 2 - is the sideways partial cross-sectional view of the electronic device when the hanger member is mounted in an embodiment of the present invention.
Figure 3 - is the view of detail A in Figure 2.

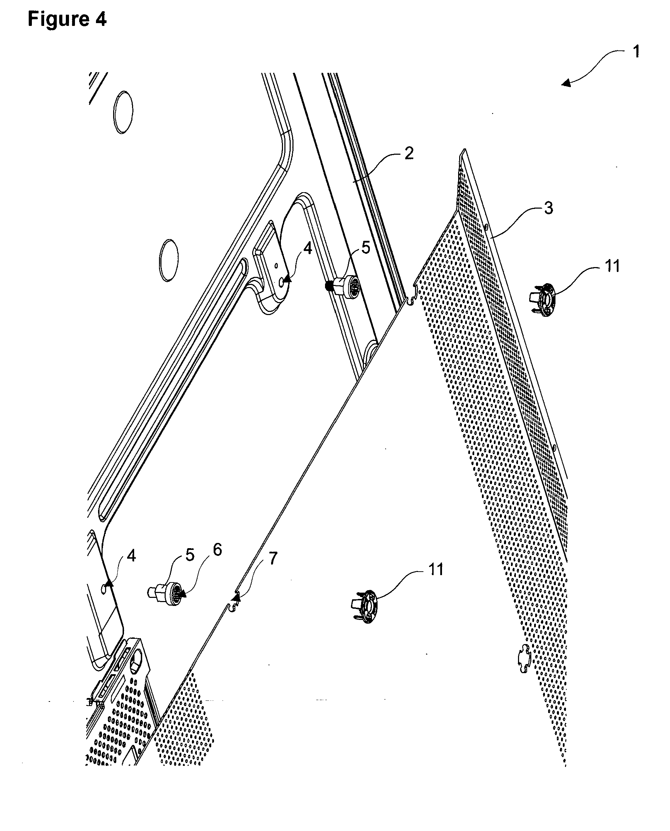

Figure 4 - is the partial exploded view of the electronic device in an embodiment of the present invention.

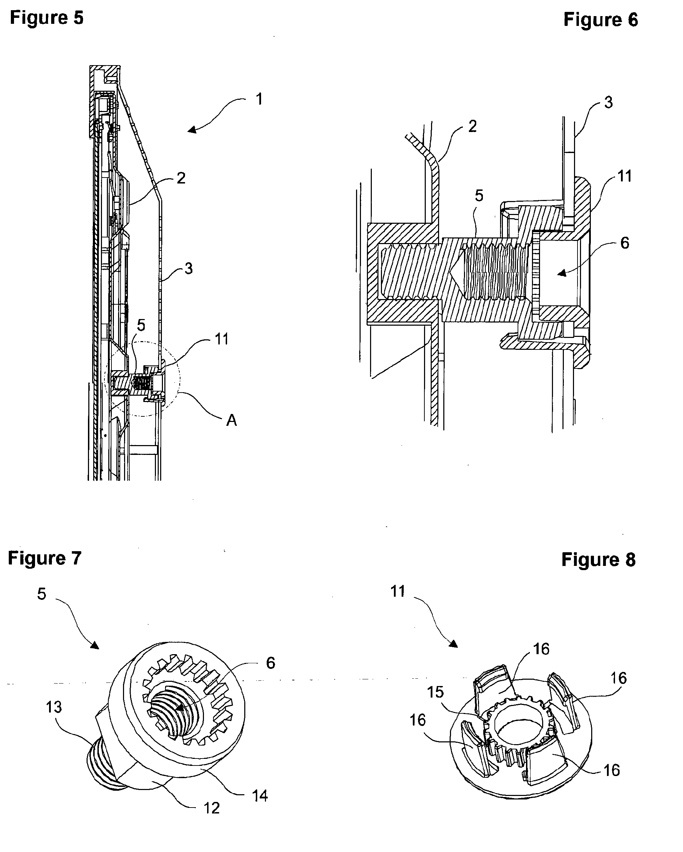

Figure 5 - is the sideways partial cross-sectional view of the electronic device when the hanger member is not mounted in an embodiment of the present invention.
Figure 6 - is the view of detail B in Figure 5.
Figure 7 - is the perspective view of the connection member in an embodiment of the present invention.
Figure 8 - is the perspective view of the lock in an embodiment of the present invention.

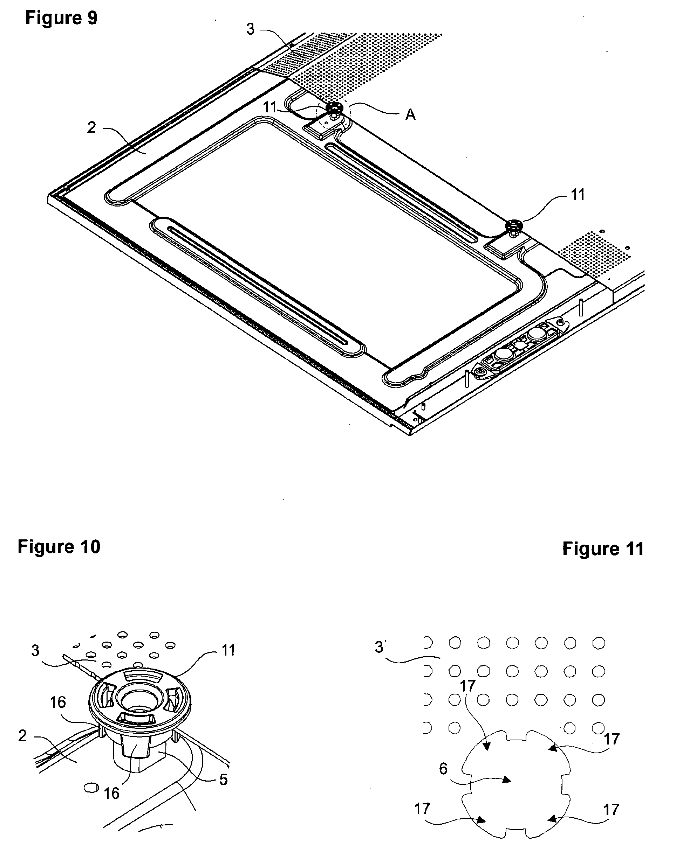

Figure 9 - is the sideways partial perspective view of the electronic device when the hanger member is not mounted.
Figure 10 - is the view of detail C in Figure 9.
Figure 11 - is the detailed view of the portion of the cover where the opening and the hole are disposed.

The elements illustrated in the figures are numbered as follows:
1. Electronic device
2. Panel
3. Cover
4. Housing
5. Connection member
6. Recess
7. Opening
8. Hanger member
9. Protrusion
10. Hanging end
11. Lock
12. Body
13. Extension
14. Flange
15. Retainer
16. Detent means
17. Hole

The electronic device (1) comprises
- a panel (2),
- a cover (3) covering the rear surface of the panel (2),
- at least one housing (4) disposed on the panel (2),
- a connection member (5) mounted to the housing (4),
- a recess (6) disposed on the connection member (5),
- an opening (7) disposed on the cover (3), aligned with the recess (6) and
- at least one hanger member (8) having a protrusion (9) that is seated into the recess (6) by extending from the opening (7) into the cover (3) and a hanging end (10) which remains outside the cover (3) and provides hanging on the wall.

When the electronic device (1) is desired to be hung on the wall, the hanger member (8) is mounted to the connection member (5) and hence to the panel (2) by placing the protrusion (9) into the recess (6). The electronic device (1) is hung on the wall by mounting the hanging end (10) to a fixing means disposed on the wall.

The electronic device (1) of the present invention furthermore comprises a lock (11) mounted onto the connection member (5) so as to remain between the hanger means (8) and the connection member (5), preventing the connection member (5) from coming out of the housing (4) when force is exerted on the hanger member (8) for dismounting it from the recess (6). Thus, when the hanger member (8) is desired to be detached in order to dismount the electronic device (1) from the wall for using it in another position or carrying it, the connection member (5) is prevented from falling between the panel (2) and the cover (3) by being detached together with the hanger member (8).

In an embodiment of the present invention, the inner surface of the housing (4) and the recess (6) is in screw hole form and the end of the connection member (5) that is seated into the housing (4) and the outer surface of the protrusion (9) are in grooved form. In this embodiment, the connection member (5) is placed into the housing (4) and the protrusion (9) into the recess (6) by being rotated. In this embodiment, the lock (11) is shaped so as to prevent the rotating of the connection member (5) when the hanger member (8) is rotated.

In an embodiment of the present invention, the connection member (5) comprises
- a body (12) whereon the recess (6) is situated,
- an extension (13) disposed on the rear surface of the body (12), placed into the housing (4) and the outer surface of which is in threaded form,
- a flange (14) disposed on the front surface of the body (12) whereon the recess (6) is opened, extending outwards from the body (12) and the inner surface of which is in threaded form.

In this embodiment, the lock (11) comprises a retainer (15), placed into the flange (14) and the outer surface of which is in threaded form.

In this embodiment, when the hanger member (8) is rotated in order to be detached, the protrusion (9) rotates in the recess (6). The rotation force is transmitted to the body (12) by means of the recess (6). However, the threaded form on the inner surface of the flange (14) and the threaded form on the outer surface of the retainer (15) bearing against each other prevents the rotating of the connection member (5) and hence the dislodging of the extension (13) from the housing (4). Thus, while the hanger member (8) is detached, the connection member (5) is prevented from coming out of its place at the same time.

In an embodiment of the present invention, the lock (11) furthermore comprises more than one detent means (16) that grasps the flange (14) from outside. Thus, the lock (11) is provided to grasp the connection member (5) better.

In an embodiment of the present invention, the lock (11) is mounted onto the connection member (5) such that the cover (3) remains between the lock (11) and the connection member (5). In this embodiment, the retainer (15) reaches the flange (14) by passing through the opening (7). In this embodiment, the cover (3) furthermore comprises a hole (17) disposed around the opening (7), aligned with each detent means (16), through which the detent means (16) passes while the lock (11) is mounted onto the connection member (5). Thus, when the hanger member (8) is rotated in order to be detached, the detent means (16) bear against the edge of the holes (17) and prevent the connection member (5) from coming out of its place.

By means of the present invention, the connection member (5) is prevented from being dislodged from the housing (4) while the hanger member (8) mounted to the panel (2) by means of a connection member (5) from above the cover (3), is detached in order that the electronic devices (1) are used by being hung on the wall.

It is to be understood that the present invention is not limited by the embodiments disclosed above and a person skilled in the art can easily introduce different embodiments. These should be considered within the scope of the protection postulated by the claims of the present invention.

The invention is defined by appended claims only.

## Claims

1. An electronic device (1) comprising
- a panel (2),
- a cover (3) covering the rear surface of the panel (2),
- at least one housing (4) disposed on the panel (2),
- a connection member (5) mounted to the housing (4),
- a recess (6) disposed on the connection member (5),
- an opening (7) disposed on the cover (3), aligned with the recess (6) and
- a lock (11) mounted onto the connection member (5), **characterized by**
- at least one hanger member (8) having a protrusion (9) that is seated into the recess (6) by extending from the opening (7) into the cover (3) and a hanging end (10) which remains outside the cover (3) and provides hanging on the wall, the lock (11) being mounted onto the connection member (5) so as to remain between the hanger member (8) and the connection member (5), preventing the connection member (5) from coming out of the housing (4) when force is exerted on the hanger member (8) for dismounting it from the recess (6), and the lock (11) being mounted onto the connection member (5) such that the cover (3) remains therebetween.

2. An electronic device (1) as in Claim 1 , **characterized by** the housing (4), the inner surface of which is in screw hole form and the connection member (5) whose end that is seated into the housing (4) is in grooved form.

3. An electronic device (1) as in Claim 1 or 2, **characterized by** the recess (6), the inner surface of which is in screw hole form and the protrusion (9), the outer surface of which is in grooved form.

4. An electronic device (1) as in Claim 3, **characterized by** the lock (11) shaped so as to prevent the rotation of the connection member (5) when the hanger member (8) is rotated.

5. An electronic device (1) as in any one of the above claims, **characterized by** the connection member (5) comprising
- a body (12) whereon the recess (6) is situated,
- an extension (13) disposed on the rear surface of the body (12), placed into the housing (4) and the outer surface of which is in threaded form,
- a flange (14) disposed on the front surface of the body (12) whereon the recess (6) is opened, extending outwards from the body (12) and the inner surface of which is in threaded form.

6. An electronic device (1) as in Claim 5, **characterized by** the lock (11) comprising a retainer (15) disposed into the flange (14), the outer surface of which is in threaded form.

7. An electronic device (1) as in Claim 5 or 6, **characterized by** the lock (11) comprising more than one detent means (16) that grasps the flange (14) from outside.

8. An electronic device (1) as in any of the above Claims, **characterized by** at least one hole (17) disposed around the opening (7), aligned with each detent means (16), through which the detent means (16) pass while the lock (11) is mounted onto the connection member (5).

## Patentansprüche

1. Elektronische Vorrichtung (1), umfassend
- eine Platte (2)
- eine Abdeckung (3), die die Rückseite der Platte (2) abdeckt,
- wenigstens ein Gehäuse (4), das an der Platte (2) angeordnet ist,
- ein Verbindungselement (5), das am Gehäuse (4) angebracht ist,
- eine Vertiefung (6), die an dem Verbindungselement (5) angeordnet ist,
- eine Öffnung (7), die an der Abdeckung (3) angeordnet und an der Vertiefung (6) ausgerichtet ist, und
- eine Verriegelung (11), die an dem Verbindungselement (5) angebracht ist, **gekennzeichnet durch**
- wenigstens ein Aufhängungselement (8) mit einem Vorsprung (9), der in der Vertiefung (6) sitzt, indem er sich von der Öffnung (7) in die Abdeckung (3) erstreckt, und ein Aufhängungsende (10), das außerhalb der Abdeckung (3) bleibt und ein aufhängen an der Wand ermöglicht, wobei die Verriegelung (11) derart an dem Verbindungselement (5) angebracht ist, dass sie zwischen dem Aufhängungselement (8) und dem Verbindungselement (5) bleibt und verhindert, dass sich das Verbindungselement (5) aus dem Gehäuse (4) löst, wenn Kraft auf das Aufhängungselement (8) ausgeübt wird, um es aus der Vertiefung (6) zu entfernen, und wobei die Verriegelung (11) derart an dem Verbindungselement (5) angebracht ist, dass die Abdeckung (3) dazwischen bleibt.

2. Elektronische Vorrichtung (1) nach Anspruch 1, **dadurch gekennzeichnet, dass** die Innenfläche des Gehäuses (4) die Form eines Schraublochs aufweist und das Ende des Verbindungselements (5), das in dem Gehäuse (4) sitzt, eine Nutform aufweist.

3. Elektronische Vorrichtung (1) nach Anspruch 1 oder 2, **dadurch gekennzeichnet, dass** die Innenfläche der Vertiefung (6) die Form eines Schraublochs aufweist und die Außenfläche des Vorsprungs (9) eine Nutform aufweist.

4. Elektronische Vorrichtung (1) nach Anspruch 3, **dadurch gekennzeichnet, dass** die Verriegelung (11) derart geformt ist, dass sie die Drehung des Verbindungselements (5) verhindert, wenn das Aufhängungselement (8) gedreht wird.

5. Elektronische Vorrichtung (1) nach einem der vorangehenden Ansprüche, **dadurch gekennzeichnet, dass** das Verbindungselement (5) Folgendes umfasst:
- einen Körper (12), an dem die Vertiefung (6) angeordnet ist,
- eine Verlängerung (13), die an der Rückseitenfläche des Körpers (12) angeordnet ist und die in dem Gehäuse (4) angeordnet ist und deren Außenfläche eine Gewindeform aufweist,
- einen Flansch (14), der an der Vorderseitenfläche des Körpers (12) angeordnet ist und an dem sich die Vertiefung (6) öffnet, und der sich vom Körper (12) nach außen erstreckt und dessen Innenfläche eine Gewindeform aufweist.

6. Elektronische Vorrichtung (1) nach Anspruch 5, **dadurch gekennzeichnet, dass** die Verriegelung (11) einen Halter (15) umfasst, der in dem Flansch (14) angeordnet ist und dessen Außenfläche eine Gewindeform aufweist.

7. Elektronische Vorrichtung (1) nach Anspruch 5 oder 6, **dadurch gekennzeichnet, dass** die Verriegelung (11) mehrere Arretierungsmittel (16) umfasst, die den Flansch (14) von außen ergreifen.

8. Elektronische Vorrichtung (1) nach einem der vorangehenden Ansprüche, **gekennzeichnet durch** wenigstens ein Loch (17), das um die Öffnung (7) herum angeordnet ist und an den einzelnen Arretierungsmitteln (16) ausgerichtet ist, und **durch** welches das Arretierungsmittel (16) tritt, während die Verriegelung (11) am Verbindungselement (5) angebracht ist.

## Revendications

1. Un appareil électronique (1) comprenant
- un panneau (2),
- un couvercle (3) couvrant la surface arrière du panneau (2),
- au moins un logement (4) disposé sur le panneau (2),
- un élément de raccordement (5) qui est monté au logement (4),
- un évidement (6) disposé sur l'élément de raccordement (5),
- une ouverture (7) qui est arrangée sur le couvercle (3) et qui est alignée avec l'évidement (6) et
- un verrou (11) qui est monté sur l'élément de raccordement (5), **caractérisé par**
- au moins un élément de suspension (8) présentant une protubérance (9) qui est placée dans l'évidement (6) en s'étendant à partir de l'ouverture (7) dans le couvercle (3) et une extrémité de suspension (10) qui reste à l'extérieur du couvercle (3) et assure la suspension sur la paroi, the verrou (11) étant monté sur l'élément de raccordement (5) de manière à rester entre l'élément de suspension (8) et l'élément de raccordement (5), empêchant l'élément de raccordement (5) de sortir du logement (4) lorsqu'une force est exercée sur l'élément de suspension (8) pour le délogement de celui-ci de l'évidement (6), et le verrou (11) étant monté sur l'élément de raccordement (5) de telle sorte que le couvercle (3) reste entre ceux-ci.

2. Un appareil électronique (1) selon la Revendication 1, **caractérisé par** le logement (4) dont la surface intérieure est en forme de trou de vis et par l'élément de raccordement (5) dont l'extrémité placée dans le logement (4) est sous forme rainurée.

3. Un appareil électronique (1) selon la Revendication 1 ou 2, **caractérisé par** l'évidement (6) dont la surface intérieure est en forme de trou de vis et par la protubérance (9) dont la surface extérieure est sous forme rainurée.

4. Un appareil électronique (1) selon la Revendication 3, **caractérisé par** le verrou (11) qui est formé de manière à empêcher la rotation de l'élément de raccordement (5) lorsque l'élément de suspension (8) est tourné.

5. Un appareil électronique (1) selon l'une quelconque des revendications précédentes, **caractérisé par** l'élément de raccordement (5) comprenant
- un corps (12) sur lequel le couvercle (6) est disposé,
- une extension (13) dont la surface extérieure est en forme filetée, qui est disposée sur la surface arrière du corps (12) et placée dans le logement (4),
- une bride (14) qui est disposée sur la surface avant du corps (12), sur laquelle l'évidement (6) est percé, qui s'étend vers l'extérieur à partir du corps (12) et dont la surface intérieure est sous forme filetée.

6. Un appareil électronique (1) selon la Revendication 5, **caractérisé par** le verrou (11) comprenant un élément de retenue (15) dont la surface extérieure est en forme filetée, qui est disposé dans la bride (14).

7. Un appareil électronique (1) selon la Revendication 5 ou 6, **caractérisé par** le verrou (11) comprenant plus d'une détente (16) qui saisit la bride (14) à partir de l'extérieur.

8. Un appareil électronique (1) selon l'une quelconque des revendications précédentes, **caractérisé par** au moins un trou (17) qui est arrangé sur l'ouverture (7), aligné avec chacune des détentes (16) et à travers lequel la détente (16) passe lorsque le verrou (11) est monté sur l'élément de raccordement (5).
